# EUROPÄISCHE PATENTSCHRIFT

(11) **EP 3 872 474 B1**
(45) Veröffentlichungstag und Bekanntmachung des Hinweises auf die Patenterteilung: **07.08.2024**
(21) Anmeldenummer: 21154904.3
(22) Anmeldetag: 03.02.2021
(51) Int. Cl.: G01M 17/007

(54) **PRÜFSTAND FÜR KRAFTFAHRZEUGE**
TEST BENCH FOR MOTOR VEHICLES
BANC D'ESSAI POUR VÉHICULES

(30) Priorität: 27.02.2020 DE 102020202512
(43) Veröffentlichungstag der Anmeldung: 01.09.2021
(73) Patentinhaber: AIP GmbH & Co. KG, 87490 Haldenwang (DE)
(72) Erfinder: KNESTEL, Anton, 87496 Hopferbach (DE); HARTMANN, Christian, 87452 Altusried (DE); BECHERER, Thomas, 87463 Dietmannsried (DE)
(74) Vertreter: MERH-IP Matias Erny Reichl Hoffmann Patentanwälte PartG mbB

(56) Entgegenhaltungen:
- WO-A1-2017/013173
- WO-A1-2018/213862
- AT-B1- 517 842
- JP-A- 2017 110 956
- US-A1- 2013 025 355
- US-B1- 8 505 374

## Beschreibung

Die vorliegende Patentanmeldung betrifft insbesondere einen Prüfstand für Kraftfahrzeuge und ein Verfahren zum automatisierten An- bzw. Abdocken eines Kraftfahrzeuges an einen solchen Prüfstand, wobei im Notfall das Abdocken automatisch auslösbar sein kann. Der Prüfstand weist eine erhöhte Sicherheit insbesondere im Hinblick auf die Prüfung von Elektrokraftfahrzeugen auf, die im Brandfall weniger schnell löschbar sind als herkömmliche Verbrennungsmotorkraftfahrzeuge bzw. gar nicht löschbar sind.

Prüfstände werden eingesetzt, um Emissions- und /oder Fahrleistungsmessungen an Kraftfahrzeugen durchzuführen, wobei die Prüfstände eine Fahrt auf einer realen Straße simulieren und damit ersetzen sollen. Dazu werden unter anderem sogenannte Rollenprüfstände eingesetzt, wie beispielsweise in der EP 1039 282 B2 dargestellt. Bei dem gezeigten Prüfstand wird das zu testende Kraftfahrzeug (kurz: Fahrzeug) auf dem Rollenscheitel gefahren. Andere Bauformen von Kraftfahrzeugprüfständen werden ebenfalls eingesetzt, wie beispielsweise in der EP 1388 884 A2 gezeigt. Dort laufen die Fahrzeugräder des zu testenden Fahrzeuges in einem Prisma zwischen den Prüfstandrollen.

Beide oben erläuterten Prüfstandtypen weisen Vor- und Nachteile auf. Beispielsweise ist die Reifenbeanspruchung des Kraftfahrzeuges auf der Scheitelrolle stra-βenähnlicher, jedoch wird eine Fahrzeugfixierung notwendig, weil das Drehmoment des Fahrzeugs über den Radius des Reifens in eine Zugkraft umgewandelt wird, die das Fahrzeug translatorisch bewegte, wenn keine Fahrzeugfixierung vorgesehen wäre. Bei einem Prüfstand, der die Fahrzeugräder in dem oben genannten Rollenprisma bzw. Prisma aufnimmt, ist zwar eine gewisse Längsstabilität des Fahrzeuges gewährleistet, jedoch kann auch hier nicht vollständig auf eine Fixierung des Fahrzeuges verzichtet werden. Bei sehr dynamischem Fahrverhalten kann der Kontakt zwischen Reifen und Rolle außerdem eine Schwachstelle sein.

Aus den oben genannten Gründen werden mittlerweile auch so genannte Antriebsstrangprüfstände verwendet, wie beispielsweise in der EP 1491 874 A1 gezeigt. Bei diesem Prüfstandtyp wird das Fahrzeug an den Achsträgern aufgenommen und die Radnaben über Gelenkwellen mit Radmaschinen bzw. Belastungsmaschinen verbunden. Nachteilig bleibt allerdings, dass der Montage- und Demontageaufwand des Kraftfahrzeuges mit den Radmaschinen relativ hoch ist und damit die Rüstzeiten entsprechend lang werden können. Weiterhin ist es speziell im Hinblick auf die zunehmende Anzahl von zu testenden Elektrokraftfahrzeugen problematisch, dass insbesondere das Abkoppeln des Kraftfahrzeuges von den Radmaschinen langwierig sein kann und manuell ausgeführt werden muss, so dass in einem Havarie- bzw. Notfall, beispielsweise einem Brand des Elektrokraftfahrzeuges, Notfallmaßnahmen nur verzögert eingeleitet werden können. Dies ist insbesondere beachtlich, da der Brand von batteriebetriebenen Kraftfahrzeugen regelmäßig nicht (einfach) löschbar ist und daher ein schnelles Wegbewegen des brennenden Kraftfahrzeuges aus dem Prüfstand von besonderer Sicherheitsbedeutung ist.

WO 2017/013173 A1 betrifft eine Prüfvorrichtung für einen Prüfstand für Kraftfahrzeuge aufweisend eine Lasteinrichtung zum Aufbringen eines Antriebs und/oder eines Belastungsmoments auf eine Nabe eines zu prüfenden Kraftfahrzeugs, eine Adaptervorrichtung, die in einer Prüfposition die Nabe des Kraftfahrzeugs mit der Lasteinrichtung, insbesondere mit deren Welle, koppelt, und eine Abstützvorrichtung für die Adaptervorrichtung, wobei die Abstützvorrichtung und die Lasteinrichtung eine gemeinsame bewegliche Basis aufweisen.

US 8 505 374 B1 beschreibt einen mobilen Prüfstandsantrieb mit einem Rahmen, einer Antriebswelle und einer Wirbelstrombremse, die einen Stator aufweist, der mit dem Rahmen verbunden ist, und einen Rotor, der mit der Antriebswelle verbunden ist. Eine Nabenkupplung ist an einem ersten Ende der Antriebswelle befestigt und mit einer Antriebswelle eines Fahrzeugs verbunden. Der starre Rahmen hat zwei sich nach außen erstreckende Stützarme zum Sichern an festen Positionen eines Prüfstands. Zwei Rollenanordnungen sind an einem unteren Ende des starren Rahmens für eine mehrdimensionale Bewegung des Prüfstandsantriebs montiert.

US 2013/025355 A1 betrifft einen Radsatz zur Erprobung eines Kraftfahrzeugs bei stillstehenden Reifen. Zur Durchführung eines Testbetriebs werden in eine Ausnehmung eines jeden Radsatzes Wellen eingebracht, die an ihrem gegenüberliegenden Ende mit einer Antriebseinheit eines Prüfstands verbunden sind.

AT 517 842 B1 betrifft ein Prüfrad zum Prüfen eines Kraftfahrzeugs auf einem Prüfstand. Das Prüfrad umfasst ein Verschiebeteil das über Bolzen mit einer Antriebswelle eines Prüfstands verbunden werden kann.

Es ist eine technische Aufgabe, einen verbesserten Kraftfahrzeugprüfstand anzubieten, der ein vereinfachtes, zeitlich verkürztes und bevorzugt (teil-)automatisiertes An- und Abdocken des Kraftfahrzeuges mit dem Prüfstand ermöglicht und damit auch die Sicherheit des Prüfstandes erhöht. Die Aufgabe wird von dem Gegenstand gemäß den beigefügten Patentansprüchen gelöst. Bevorzugte Weiterentwicklungen werden insbesondere in den abhängigen Patentansprüchen beschrieben.

Insbesondere wird ein Prüfstand für das Testen von Kraftfahrzeugen beschrieben. Teil des Prüfstandes ist eine Aufstellfläche , auf der ein zu testendes Kraftfahrzeug aufstellbar ist. Bevorzugt kann das zu testende Kraftfahrzeug mit seiner Längsachse parallel zu einer gedachten Längsachse der Aufstellfläche aufstellgestellt werden. Nachfolgend soll die Längsachse der Aufstellfläche bzw. eine parallele Gerade dazu als X-Richtung bzw. X-Achse bezeichnet werden.

Weiterhin weist der Prüfstand mindestens zwei Radvorrichtungen zum Aufnehmen von Drehkräften einer Kraftfahrzeugachse und/oder zum Abgeben von Drehkräften an eine Kraftfahrzeugachse auf. Die Radvorrichtungen sind lateral versetzt zu der Aufstellfläche angeordnet, wobei der Begriff lateral versetzt bedeuten soll, dass die Radvorrichtungen seitlich zu der Aufstellfläche angeordnet sind. Im Hinblick auf die oben definierte X-Richtung kann die laterale Richtung auch als Y-Richtung bezeichnet werden, die um 90° zu der X-Richtung gedreht ist.

Weiterhin weist jede der Radvorrichtungen ein Einführmittel auf, das selbst oder mittels einer verfahrbaren Radvorrichtung in der Richtung einer (Quer-)Achsrichtung des Kraftfahrzeuges translatorisch verfahrbar ist. Die Achsrichtung des Kraftfahrzeuges soll bevorzugt der oben definierten Y-Richtung entsprechen. Weiterhin weist das Einführmittel einen Einführabschnitt auf, der dazu eingerichtet ist, formschlüssig mit einem Aufnahmeabschnitt eines Rades des Kraftfahrzeuges in Eingriff gebracht zu werden. Das Rad des Kraftfahrzeuges, das auf dem Prüfstand aufgestellt bzw. montiert wird, ist ein sogenanntes Testrad, das vor dem Test bzw. vor der Montage des Kraftfahrzeuges auf dem Prüfstand anstelle des eigentlichen Rades des Kraftfahrzeuges montiert wird. Ein solches Testrad weist einen Aufnahmeabschnitt für den Einführabschnitt des Einführmittels der Radvorrichtung auf.

Der oben genannte Aspekt des hier beschriebenen Prüfstands bringt die technischen Vorteile mit sich, dass ein schnelles Einführen des Einführabschnittes in den Aufnahmeabschnitt des Rades des Kraftfahrzeuges ermöglicht wird. Dies reduziert den Montageaufwand und die damit verbundenen Arbeitszeiten. Das Einführen kann automatisiert über ein translatorisches Verschieben der Radvorrichtung oder des Einführmittels erfolgen. Dazu kann der Prüfstand bevorzugt mit einer Steuervorrichtung verbunden sein, die den (De-)Montage bzw. Ab-/Andockvorgang steuern kann. Auch das Abdocken kann durch ein einfaches Herausfahren des Einführabschnittes aus dem Aufnahmeabschnitt sehr schnell und automatisiert erfolgen, so dass im Havariefall eine erhöhte Sicherheit geboten werden kann.

Selbst falls das Einführen des Einführabschnittes der Radvorrichtung(en) nicht mittels einer Automatisierung sondern manuell erfolgen sollte, so kann dies deutlich schneller ausgeführt werden, als wenn eine aufwendige Montage der Radvorrichtungen mit den Fahrzeugachsen mittels mechanischer Verbindungsmittel, beispielsweise Schrauben, Klemmen, etc., erfolgen würde.

Ferner ist der Prüfstand derart eingerichtet, dass der Einführabschnitt des Einführmittels keilwellenförmig ist und Mitnehmer aufweist. Die Mitnehmer des keilwellenförmigen Einführabschnittes ermöglichen einen formschlüssigen Eingriff mit dem Aufnahmeabschnitt, der entsprechende Gegenstücke der Mitnehmer aufweist, die in der Eingriffssituation ineinander greifen und somit die Übertragung eines Drehmoments bzw. einer Rotation ermöglichen. Die vorgenannte Ausführung mittels eines keilwellenförmigen Einführabschnittes erlaubt eine sehr schnelle und sichere Einführung des Einführabschnittes in den Aufnahmeabschnitt und einen sicheren Halt in der Eingriffssituation.

Ferner kann der Einführabschnitt zusätzlich auch konusförmig ausgeführt sein. Durch die Konusform ist eine Verjüngung des Einführabschnittes zu dem Ende des Einführmittels hin gewährleistet, die ein noch leichteres Einführen bzw. ein im Hinblick auf die Passgenauigkeit erleichtertes Einführen des Einführabschnittes ermöglicht.

Ferner weist das auf der Aufstellfläche aufgestellte Kraftfahrzeug, wie bereits oben erläutert wurde, Testräder auf, die vor dem Test bzw. vor dem Aufstellen des Kraftfahrzeuges auf dem Prüfstand montiert werden. Diese Testräder weisen jeweils eine Vielkeilbuchse als Aufnahmeabschnitt auf, wobei die Vielkeilbuchse vorgesehen ist, wenn ein keilwellenförmiger Einführabschnitt vorgesehen ist, so dass mit geringem Aufwand eine formschlüssige Verbindung zwischen Aufnahme- und Einführabschnitt hergestellt werden kann bzw. auch wieder gelöst werden kann.

Ferner können sowohl der Einführabschnitt als auch der Aufnahmeabschnitt oder beide Abschnitte zu ihrem jeweiligen Endabschnitt zugespitzt bzw. verjüngt geformt sein. Dadurch wird insbesondere ein erleichtertes Einführen gewährleistet.

Ferner kann die Radvorrichtung zumindest ein Antriebsmittel zum Rotieren des Einführmittels aufweisen. Ferner kann das gleiche Antriebsmittel auch zum translatorischen Verfahren des Einführmittels in Y-Richtung eingerichtet sein. Alternativ kann die Radvorrichtung auch ein weiteres Antriebs- bzw. Aktuierungsmittel aufweisen, das das translatorische Verfahren des Einführmittels in Y-Richtung ausführen kann. Weiterhin kann auch die Radvorrichtung selbst in Y-Richtung verfahrbar angeordnet sein, so dass auch das Verfahren der Radvorrichtung anstatt oder zusätzlich zu dem Einführmittel genutzt werden kann, um das Andocken oder Abdocken durchzuführen.

Die Radvorrichtung ermöglicht somit das Aufnehmen oder Abgeben insbesondere von Drehkräften von einer Fahrzeugachse während des Testverfahrens und weiterhin kann die Radvorrichtung eine automatisierte Demontage bzw. Montage des Kraftfahrzeuges mit dem Prüfstand ermöglichen.

Ferner kann der Prüfstand und insbesondere die Radvorrichtung zumindest ein Messmittel zum Erfassen einer Einführposition des Einführmittels aufweisen. Das Messmittel kann auch ein Erkennungs- bzw. Bestimmungsmittel sein. Es kann ein Messmittel vorgesehen sein, das eine Einführposition in X- oder Y-Richtung detektiert. Weiterhin kann ein Messmittel vorgesehen sein, das in beide Richtungen, d.h. X- und Y-Richtung, die Einführposition erfassen bzw. bestimmen kann. Ebenfalls können auch zwei Messmittel vorgesehen sein, die jeweils eine der beiden Richtungen, d.h. X- und Y-Richtung, im Hinblick auf das Erkennen der Einführposition abdecken.

Weiterhin ist es besonders bevorzugt, dass die Höhe der Einführposition, d. h. der Abstand zwischen Längsachse des Einführabschnittes und Bodenfläche der Aufstellfläche des Prüfstandes von dem Durchmesser des Testrades fest vorgegeben ist, so dass besonders bevorzugt keine Verfahrbarkeit der Radvorrichtung bzw. des Einführabschnittes in die Z-Richtung notwendig ist. Mit anderen Worten kann die Höhe der Einführposition fix durch die Wahl des Testrades, das besonders bevorzugt Vollgummilaufflächen aufweist, die höhenunveränderlich sind, definiert sein. Alternativ dazu kann jedoch auch eine Aktuation der Radvorrichtung bzw. des Einführabschnittes in Z-Richtung zusätzlich zu der Y-Richtung und/oder der X-Richtung vorgesehen sein.

Bezüglich der oben genannten Messmittel ergibt sich der Vorteil, dass zielgenau die Montage des In-Eingriff-Bringens, d.h. das Andocken, zwischen dem Eingriffsabschnitt und dem Aufnahmeabschnitt durchgeführt werden kann, ohne dass dies mit vergrößertem Montageaufwand bzw. Vorbereitungsaufwand einherginge.

Das Messmittel kann unter anderem ein mechanisches Abtastmittel sein, das in einem besonders wenig komplexen und damit vorteilhaften Beispiel ein Messstab sein kann, der parallel zu dem Einführabschnitt und in Längsrichtung über dessen Ende hinaus überstehend an der Radvorrichtung montiert sein kann. Dieses mechanische Abtastmittel, das beispielsweise ein stabförmiges Element ist, kann beispielsweise zielgenau in eine vorbekannte Öffnung des Testrades eingeführt werden, so dass damit auch das Einführmittel bzw. dessen Einführabschnitt passgenau in den Aufnahmeabschnitt eingeführt werden kann. Ferner kann auch ein optisches Abtastmittel vorgesehen sein, das im Hinblick auf das Erfassen der Einführposition in Längsrichtung beispielsweise einen Abstand zwischen Testrad und Einführabschnitt erfassen kann, der an die Steuereinrichtung des Prüfstandes weitergeben kann, so dass die Einführtiefe des Einführabschnittes genau bestimmt werden kann. Auch kann das optische Abtastmittel im Hinblick auf die Erfassung der X-Position dazu geeignet sein, bestimmte Strukturen des Testrades, die vorbekannt sind, zu erkennen und daraus mithilfe der Steuervorrichtung ein definiertes Einführen des Einführabschnittes auszuführen. Weiterhin kann auch ein Bilderkennungsmittel, wie z. B. eine Kamera, an dem Einführmittel bzw. der Radvorrichtung vorgesehen sein, so dass mittels Bildauswertung die Lage des Aufnahmeabschnittes mittels Bilderkennung im Hinblick auf die X-, Y-, und/oder Z-Richtung ausgewertet werden kann. Die Kamera kann ferner auch den Drehwinkel des Aufnahmeabschnittes erfassen und somit mittels des bekannten Drehwinkels des Einführabschnittes der Steuerung die Information über den einzustellenden Drehwinkels des Einführabschnittes übermitteln, so dass der Einführabschnitt möglichst passgenau in den Aufnahmeabschnitt eingefahren werden kann.

Selbstverständlich ist auch eine Kombination der vorgenannten Messmittel möglich: Beispielsweise könnte eine solche Kombination ein optisches Abtastmittel zur Detektion der Entfernung des Einführabschnittes zu dem Testrad und ein Bilderkennungsmittel umfassen, wobei letzteres die Einführposition in X-Richtung erfassen könnte. Das optische Bilderkennungsmittel kann zusätzlich zu der Kamera bzw. einem Bildaufnahmegerät auch eine Auswertelogik umfassen, die u. a. auch eine künstliche Intelligenz zur Auswertung der Einführposition beinhalten kann. Diese künstliche Intelligenz ist, falls vorgesehen, bevorzugt in einer Steuervorrichtung des Prüfstandes integriert.

Ferner kann das Einführmittel mit einer Antriebswelle verbunden sein, die mit einer Ausgangswelle der Antriebseinheit bzw. des Antriebsmittels der Radvorrichtung verbunden sein kann. Besonders bevorzugt ist die Antriebswelle gelenkig gelagert, so dass technisch vorteilhaft auch zum Beispiel Anstellwinkel des Rades, die nicht der Senkrechten entsprechen, von der Antriebswelle und dem Einführmittel nachvollzogen werden können.

Ferner kann der Prüfstand insbesondere für das Testen von zweiachsigen Kraftfahrzeugen vorgesehen sein, so dass insbesondere vier der Radvorrichtungen vorgesehen sein können. Bevorzugt sind dabei zwei der Radvorrichtungen, die entweder den Vorder- oder den Hinterrädern zugeordnet sind, in X-Richtung positionsfest relativ zur Aufstellfläche angeordnet und die beiden anderen Radvorrichtungen entlang der X-Achse seitlich zu der Aufstellfläche bewegbar, z. B. verfahrbar entlang einer Schiene, angeordnet. Besonders bevorzugt befindet sich im Bereich der Aufstellfläche, in dem die Vorderräder während des Testens zum Halten kommen sollen, eine Mulde zur Aufnahme der Vorderräder, so dass eine klar vordefinierte X-Positionierung des Kraftfahrzeuges auf der Aufstellfläche gewährleistet wird. Fluchtend entlang der Längsrichtung der zur Aufstellfläche quer verlaufenden (in Y-Richtung) Mulde können die Radvorrichtungen, die in X-Richtung positionsfest mit dem Prüfstand verbunden sein können, angeordnet sein, so dass bei der Montage des Kraftfahrzeuges mit dem Prüfstand bzw. dem Andocken des Kraftfahrzeuges an dem Prüfstand lediglich die Radvorrichtungen der Hinterräder in X-Richtung verschoben werden müssen, um sie auf den Achsabstand des zu testenden Kraftfahrzeuges anzupassen. Das Verfahren der verfahrbaren Radvorrichtungen entlang der X-Richtung kann automatisiert ausgeführt werden und im Hinblick auf eine besonders bevorzugt vorgesehene Steuervorrichtung des Prüfstandes kann diese eine Speichereinheit und/oder eine Recheneinheit aufweisen, die für jeden zu testenden Kraftfahrzeugtypen einen entsprechenden Achsabstand gespeichert hat und die Radvorrichtungen entsprechend automatisch verfahren werden können.

Ferner umfasst die hier vorgestellte Offenbarung auch ein Verfahren für das Andocken oder Abdocken (bzw. Montage oder Demontage) eines zu testenden Kraftfahrzeuges an dem Prüfstand. Dieses Verfahren umfasst die Schritte des Aufstellens des Kraftfahrzeuges mit montierten Testrädern auf der Aufstellfläche des Prüfstandes. Besonders bevorzugt und bei einer vorgesehenen Mulde für die Vorderräder, werden die vorderen Testräder des Kraftfahrzeuges in der Mulde abgestellt. Weiterhin umfasst das Verfahren das Bewegen der Radvorrichtungen parallel zu der Längsachse der Aufstellfläche (X-Richtung), so dass jedes Einführmittel fluchtend zu einem Aufnahmeabschnitt eines Rades des Kraftfahrzeuges angeordnet ist. Hierbei soll fluchtend insbesondere bedeuten, dass die Längsachse des Einführmittels mit einer Längsachse des jeweiligen Aufnahmeabschnittes übereinstimmen angeordnet ist. Weiterhin ist das Verfahren jedes Einführmittels oder der Radvorrichtungen quer zu der Richtung der Längsachse der Aufstellfläche (Y-Richtung) vorgesehen, und zwar soweit bis ein Eingriff zwischen dem Einführabschnitt und dem Aufnahmeabschnitt hergestellt ist. Bevorzugt kann das Einfahren bzw. die Tiefe des Einfahrens mittels eines oben beschriebenen Messmittels gesteuert werden.

Das An- und auch Abdocken ist sehr schnell und automatisierbar ausführbar. Insbesondere ist zu beachten, dass die oben genannten Verfahrensschritte im Wesentlichen für das Andocken ausgeführt werden, während das Abdocken den Schritt des in Y-Richtung Zurückfahrens der Radvorrichtung und/oder des Einführmittels aus dem Eingriff mit dem Aufnahmeabschnitt beinhaltet.

Ferner kann das Verfahren umfassen, dass Toggel- bzw. Hin- und Her-Bewegungen des Einführabschnittes beim Einführen dessen in den Aufnahmeabschnitt ausgeführt werden, die beispielsweise die Steuervorrichtung des Prüfstandes ansteuern kann. Solche Hin- und Her-Bewegungen bzw. Toggelbewegungen können dazu führen, dass ein erleichtertes Einführen des Einführabschnittes ermöglicht wird, da gegebenenfalls in der Projektion zueinander überlappende Mitnehmer eines keilwellenförmigen Einführabschnittes mit einem keilwellenförmigen bzw. Vielkeilaufnahmeabschnittes eine Blockade gegen das Einführen hervorrufen können. Alternativ oder zusätzlich kann auch bspw. mittels einer Kamera erfasst werden, wie die Mitnehmer der Abschnitte zueinander rotatorisch angeordnet sind, um diese so rotatorisch zu verfahren, dass ein Einführen passgenau möglich ist.

Ferner kann auch ein eigenes Verfahren zum Herausfahren des Einführabschnittes vorgesehen sein, das im Wesentlichen einen Schritt des Herausfahrens des Einführabschnittes aus dem Aufnahmeabschnitt umfasst, wenn eine Notfallsituation erkannt, detektiert und/oder gemeldet wurde. Dieses Notfall-Verfahren wird bevorzugt an einem Prüfstand gemäß zumindest einem der oben erläuterten Aspekte durchgeführt. Bevorzugt wird dabei (zumindest) folgender Schritt ausgeführt: Verfahren/Bewegen zumindest einer oder jeder Radvorrichtung oder zumindest eines oder jedes Einführmittels der Radvorrichtung quer zu der Richtung der Längsachse der Aufstellfläche des Prüfstandes. Das Verfahren/Bewegen wird so weit ausgeführt bis der Einführabschnitt des Einführmittels und der Aufnahmeabschnitt des jeweiligen Rades des Kraftfahrzeuges außer Eingriff gebracht sind.

Ferner kann der Prüfstand im Notfall besonders schnell durch ein Herausfahren des Einführabschnittes aus dem Aufnahmeabschnitt automatisiert abgedockt werden. Ein solcher Notfall, wie z. B. ein Brand des Kraftfahrzeuges, kann bevorzugt durch eine Brandmeldeanlage, eine manuell zu bedienende Not-Kette, einen Notschalter oder dergleichen oder auch automatisiert über entsprechende Sensorik des Prüfstandes oder des Gebäudes, in dem der Prüfstand aufgebaut ist, erfasst werden und beispielsweise an die Steuereinrichtung/-vorrichtung gemeldet werden. Besonders bevorzugt kann die Steuereinrichtung des Prüfstandes im Notfall die Abkopplung automatisiert ansteuern bzw. instruieren.

Ferner kann im Notfall auch das Antriebsmittel der Radvorrichtungen momentfrei geschaltet werden.

Zusammengefasst können somit unter anderem die technischen Vorteile erzielt werden, ein schnelles Demontieren und Montieren eines zu testenden Kraftfahrzeuges mit geringem Arbeitsaufwand zu ermöglichen, wobei die Montage und auch die Demontage besonders bevorzugt automatisiert durchgeführt werden kann. Für den Fall des Testens eines Elektrokraftfahrzeuges und in einem Brandnotfall ist die schnelle und automatisierte Demontage (Abdocken) von besonderen Vorteil, da auf diese Weise das zu trennende Testkraftfahrzeug schnell und sicher aus der Prüfstandumgebung herausbewegt werden kann.

Vorliegende Gegenstände und Verfahren werden im Folgenden exemplarisch mit Bezug auf die beigefügten, schematischen Figuren beschrieben.
- Figur 1: zeigt eine Radvorrichtung im Schnitt, die im Eingriff mit einem Aufnahmeabschnitt eines Testrades ist.
- Figur 2: zeigt die Perspektive einer Testzelle mit dem darin aufgebauten Prüfstand und einem aufgestellten Kraftfahrzeug.
- Figur 3: zeigt den Prüfstand ohne Testfahrzeug.
- Figur 4: zeigt einen von dem Testrad getrennten Einführabschnitt sowie ein Testrad und einen vorderen Teil einer Radvorrichtung im Schnitt.
- Figur 5: zeigt vergrößerte Details bzw. einen vergrößerten Ausschnitt eines Einführabschnittes und eines Aufnahmeabschnittes.
- Figur 6: zeigt ein auf dem Prüfstand montiertes Kraftfahrzeug in der Vogelperspektive.
- Figur 7: zeigt ein auf dem Prüfstand aufgestelltes Kraftfahrzeug, das nicht mit dem Prüfstand angedockt ist.

Im Folgenden werden verschiedene Beispiele detailliert unter Bezugnahme auf die Figuren beschrieben. Gleiche bzw. ähnliche Elemente in den Figuren werden hierbei mit gleichen Bezugszeichen bezeichnet. Damit soll jedoch keine Einschränkung auf die beschriebenen Beispiele einhergehen; vielmehr kann der beschriebene Gegenstand auch Modifikationen von Merkmalen der beschriebenen Beispiele und Kombination von Merkmalen verschiedener Beispiele im Rahmen des Schutzumfangs der unabhängigen Ansprüche umfassen.

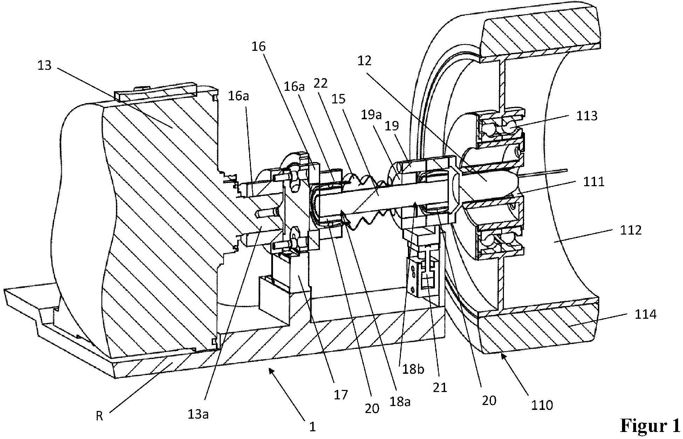

Figur 1 zeigt ein Beispiel eines Teils einer Radvorrichtung 10 gemäß einem hier beschriebenen Ausführungsbeispiel. Ein Einführabschnitt 12 eines Einführmittels 11 der Radvorrichtung 10 befindet sich in Eingriff mit einem Testrad 110 eines Kraftfahrzeuges 100, das auf dem in Figur 1 nicht vollständig gezeigten Prüfstand 1 aufgestellt ist. Sowohl das Testrad 110 als auch die Radvorrichtung 10 sind im Schnitt dargestellt. In der Schnittdarstellung ist insbesondere zu erkennen, dass das Testrad 110 neben einer Felge 112, die ein Entkopplungslager 113 aufweist, auch eine Vollgummilauffläche 114 umfasst. Die Vollgummilauffläche 114 erlaubt es, dass die Höhenposition des ebenfalls zu erkennenden Aufnahmeabschnittes 111 des Testrades 110 fest vordefiniert ist. Das Entkopplungslager 113 umfasst bevorzugt ein Rollen-, Kugel- oder vergleichbares Lager, das eine Rotation der Kraftfahrzeugachse (nicht gezeigt) von einer Rotation des Testrades 110 entkoppelt. Mit anderen Worten ermöglicht das Entkopplungslager 113, dass die Kraftfahrzeugachse rotiert, ohne dass das Testrad 110 rotiert.

Weiterhin ist aus der Figur 1 zu entnehmen, dass der Einführabschnitt 12 in diesem Beispiel bevorzugt konusförmig ausgeführt ist und einen vorderen Teil des Einführmittels 11 umfasst, der formschlüssig mit dem Testrad 110 in Eingriff bzw. in Verbindung gesetzt werden kann, so dass ein Drehmoment bzw. eine Rotation von dem Einführmittel 11 auf den Aufnahmeabschnitt 111 des Testrades 110 oder umgekehrt übertragen werden kann. Der Aufnahmeabschnitt 111 ist bevorzugt mit der in den Figuren nicht sichtbaren (Quer-)Achse des Kraftfahrzeuges 100 drehfest verbunden und über das Entkopplungslager 113, wie oben beschrieben wurde, rotatorisch von dem übrigen Testrad 110 entkoppelt.

Das Einführmittel 11 ist, wie gezeigt, mit einer Antriebswelle 15 verbunden, die wiederum mit einer Ausgangswelle 13a einer Antriebseinheit bzw. eines Antriebsmittels 13 der Radvorrichtung 10 verbunden sein kann. Besonders bevorzugt, wie in Fig. 1 dargestellt, kann zwischen der Ausgangswelle 13a und der Antriebswelle 15 eine Drehmomentmesszelle bzw. eine Drehmomentmesswelle 16 vorgesehen sein, so dass über eine in Figur 1 nicht dargestellte elektrische Leitung zu einer nicht gezeigten Steuervorrichtung des Prüfstandes 1 eine sehr genaue Erfassung und/oder Regelung des auf die Antriebswelle 15 übertragenen Drehmomentes bzw. der Rotation erfolgen kann. Die Drehmomentmesswelle 16 kann im Querschnitt im Wesentlichen H-förmig ausgebildet sein, so dass die Ausgangswelle 13a und die Antriebswelle 15 axial fluchtend zueinander jeweils in den Abschnitten (Buchsen 16a) zwischen den Längsabschnitten der H-Form eingeführt und dort zumindest rotatorisch fest befestigt werden können. Eine Stützeinheit 17 kann ferner im Bereich der Drehmomentmesswelle 16 vorgesehen sein, so dass eine Z-Richtung bzw. eine Höhe der Antriebswelle 15 in Z-Richtung fest vorgegeben werden kann. Die Stützeinheit 17 kann auf einem Abschnitt eines Rahmes R der Radvorrichtung 10 gelagert sein und bevorzugt umfasst die Stützeinheit 17 einen in der Höhe angepassten Block, der beispielsweise aus Metall gefertigt sein kann.

Ferner kann die Antriebswelle 15 gelenkig gelagert sein, wozu in dem Beispiel der Fig. 1 ein hinteres und ein vorderes Gelenk 18a, b gezeigt sind, in die die Antriebswelle 15 eingeführt ist. Die Antriebswelle 15 ist dazu innerhalb einer Gelenkbuchse 19 mit einem abgerundeten Abschlusskopf 20 verbunden, der innerhalb der Gelenkbuchse 19 an den Innenwänden der Gelenkbuchse 19 entlang insbesondere eine Verkippbewegung ausführen kann. Die Gelenkbuchse 19 kann auf einer dem Rad 110 abgewandten Seite eine elastische Dichtung 19a, bspw. aus Gummi oder elastischen Kunststoff, aufweisen, die ringförmig ist und das Innere der Gelenkbuchse 19 nach außen verschließt und durch die die Antriebswelle 15 passgenau hindurchgeführt ist. Das Einführmittel 11 ist bevorzugt auf der dem Rad zugewandten Seite der Gelenkbuchse 19 flanschartig montiert, bevorzugt lösbar bspw. mittels Schraubverbindungen, so dass das Innere der Gelenkbuchse 19 zur Radseite hin ebenfalls nach außen verschlossen ist. Die Elastizität der Dichtung 19a erlaubt die Erhaltung der oben beschriebenen Gelenkigkeit der Antriebswelle 15 bzw. einer Gelenkigkeit zwischen dem Einführmittel 11 und der Antriebswelle 15. Diese Gelenkigkeit ist besonders vorteilhaft, wenn es notwendig ist, Kraftfahrzeuge 100 mit einem Radsturzwinkel abweichend von der Vertikalen zu testen. Zum Einstellen des vorderen Gelenkes 18b kann beispielsweise ein Aktuator 21 unterhalb des vorderen Gelenks 18b vorgesehen sein, der den vorderen Teil der Antriebswelle 15 in Z-Richtung nach oben oder unten auslenkt. Der Aktuator kann über nicht gezeigte Steuerleitungen und/oder Elektroleitungen mit der Steuervorrichtung des Prüfstandes 2 verbunden sein.

Ferner kann auch der Teil der Antriebswelle 15, der in einer Buchse 16a der Drehmomentmesswelle 16 eingeführt ist, einen abgerundeten Abschlusskopf 20 aufweisen und somit gelenkig, insbesondere verkippbar zu der Längsachse der Antriebswelle 15, gelagert sein kann. Eine elastische Gelenkabdeckung 22 kann den Übergangsbereich zwischen Buchse 16a und Antriebswelle 15 überdecken.

Allgemein sei ferner angefügt, dass die Verbindungen zwischen den einzelnen vorgenannten Abschnitten der Radvorrichtung über Schraubverbindungen, stoffliche Verbindungen und/oder formschlüssige Verbindungen ausgeführt sein können, besonders bevorzugt wird dabei das Welle-Nabe-Prinzip. Die nur schematisch gezeigte Antriebseinheit bzw. Antriebsmittel 13 der Radvorrichtung kann besonders bevorzugt eine rotatorische Bewegung auf die Antriebswelle 15 übertragen oder von dieser aufnehmen. Ferner kann das Antriebsmittel 13 in einer bevorzugten Alternative auch eine translatorische Bewegung entlang der Längsachse der Antriebswelle 15, die einer Y-Richtung entspricht, ausführen.

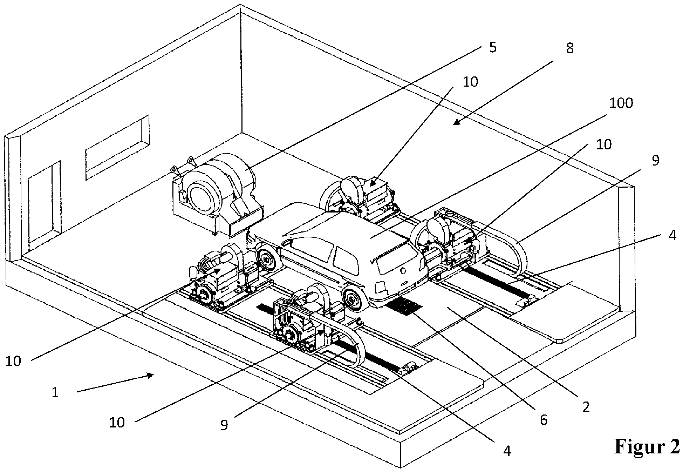

Die Figur 2 zeigt den Prüfstand 1 mit einem Kraftfahrzeug 100 in der Perspektive, das auf der Aufstellfläche 2 des Prüfstandes 1 aufgefahren ist und mit den Vorderrädern in einer Mulde 3 bzw. einem Prisma 3 steht. Das Prisma bzw. die Mulde 3 der Aufstellfläche 2 ermöglichen auf baulich wenig komplexe Art und Weise, dass eine in X-Richtung vordefinierte Abstellposition des Kraftfahrzeuges 100 vorgegeben werden kann. Wie Figur 2 weiterhin zeigt sind die für die Vorderräder vorgesehenen Radvorrichtungen 10 dann fluchtend zu der Querrichtung der Mulde 3 aufgestellt, so dass für das Andocken der Radvorrichtungen 10 mit den Vorderrädern lediglich ein Ausfahren des Einführabschnittes 12 oder ein Verschieben der Radvorrichtungen 10 in Y-Richtung notwendig ist; und zwar soweit bis der Einführabschnitt 12 und der Aufnahmeabschnitt 111 miteinander in Eingriff stehen.

Ferner sind auch die in X-Richtung verfahrbaren Radvorrichtungen 10, die bevorzugt den Hinterrädern zugeordnet werden, in der Figur 2 gezeigt. Diese sind in dem Beispiel der Figur 2 anhand einer Schiene bzw. innerhalb eines Schienensystems 4 verfahrbar. Das Verfahren kann automatisiert mittels eines Motors oder manuell ausgeführt werden. An den Radvorrichtungen 10 sind Kabelschleppen 5 mit Kabeln angebunden, die sowohl die elektrische Spannungsversorgung als auch eine Signalübertragung zwischen dem Prüfstand 1 und einer hier nicht gezeigten Steuervorrichtung einer Steuereinrichtung bzw. Steuerzentrale ermöglichen.

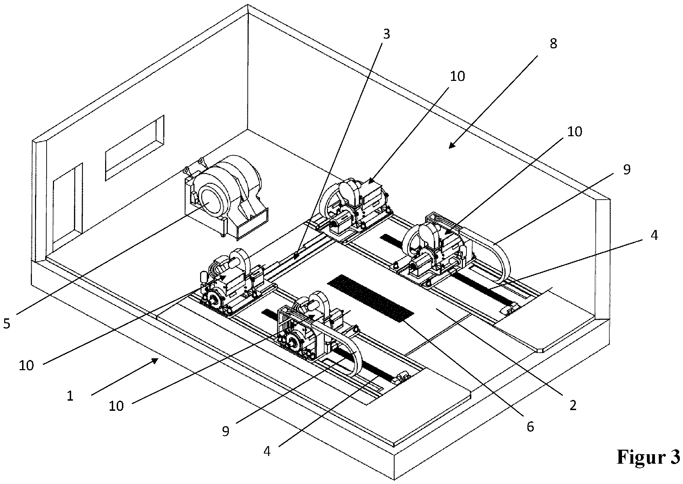

Ferner zeigt die Figur 3 dann den gleichen Prüfstand der Figur 2, jedoch ohne das Kraftfahrzeug 100, so dass sowohl die bereits vorbeschriebene Mulde 3 deutlich zu erkennen ist, als auch eine weitere Einrichtung, die im Bereich der Aufstellfläche vorgesehen sein kann. Diese stellt einen Luftauslass 6 dar, durch die eine Kühlung einer Abgasanlage und der Antriebselemente mittels austretendem Kühlmittel bzw. Kühlluft erfolgen kann. Ebenfalls ist ein Gebläse 5 in X-Richtung versetzt zu dem Kopfabschnitt der Aufstellfläche 2 gezeigt, das u.a. für das Erzeugen des simulierten Fahrtwindes herangezogen wird.

Beide Figuren 2 und 3 zeigen außerdem die hier beispielhaft gezeigte Variante einer Ausführungsform nach der auch in Y-Richtung angeordnete Querschienen 7 vorgesehen sind, auf denen der Rahmen R der Radvorrichtung 10 bzw. die Radvorrichtung 10 entlang einer Y-Richtung verschoben werden können, um das An- oder Abdocken durchzuführen. Das Verschieben kann motorisiert und von der Steuervorrichtung automatisiert angesteuert erfolgen und/oder manuell.

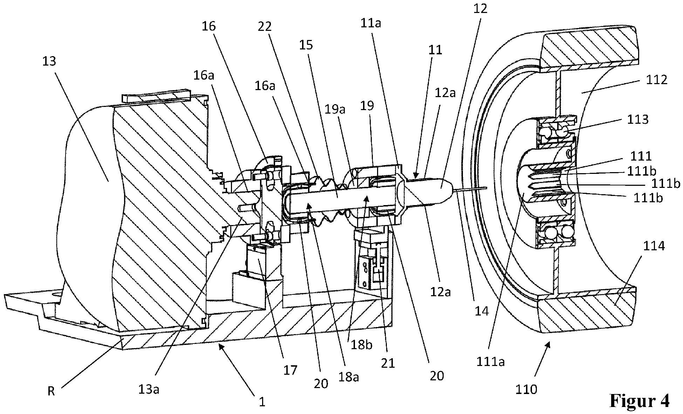

Die Figur 4 zeigt nun einen Ausschnitt des Prüfstandes 1 analog zu Figur 1, wobei der entkoppelte bzw. demontierte bzw. abgedockte Zustand gezeigt sind (während Figur 1 den angedockten bzw. gekoppelten Zustand zeigt). Hierbei zeigt sich insbesondere, dass der bevorzugte Aufnahmeabschnitt 111 interne Mitnehmer 111b entsprechend eines Vielkeilaufnahmeabschnittes aufweist. Ebenfalls lassen sich in der Figur 4 die Mitnehmer 12a eines keilwellenförmigen und konusförmigen Einführabschnittes 12 erkennen.

Weiterhin zeigt die Figur 4 ein mechanisches Messmittel 14 in Form eines stangenförmigen Elementes, das parallel zu der Längsachse des Einführabschnittes 12 bzw. der Antriebswelle 15 in einem vorderen Bereich der Radvorrichtung 10 seitlich versetzt zu dem Einführabschnitt 12 angeordnet ist. Dieses stangenförmige Element, das hier als mechanisches Messmittel 14 eingesetzt wird, kann derart mit der Radvorrichtung 10 verbunden sein, dass es in einen Hohlraum zwischen dem Aufnahmeabschnitt 111 und dem Entkopplungslager 113 des Testrades 110 eingeführt werden kann und somit insbesondere im Hinblick auf das Auffinden der korrekten X-Position zum Einführen des Einführabschnittes 12 dienlich ist. Alternativ kann das in der Figur 4 gezeigte Messmittel 14 auch ein Lichtstrahlemitter sein, bspw. ein time-of-flight Sensor oder Laserpointer oder dgl., der analog zu dem mechanischen Messmittel eine Einführposition des Einführmittels 12 erfassen kann, insbesondere durch ein Erfassen einer Entfernung zu dem Rad.

Alternativ kann auch, wie nicht in der Figur dargestellt, eine kleine Kamera oder ein sonstiges Bildaufnahmeelement als Messmittel 14 bevorzugt im vorderen Bereich der Radvorrichtung 10, beispielsweise auf dem vorderen Gelenk 18b, montiert sein, so dass die korrekte Einführposition mittels Bilderkennung detektiert werden kann. Weiterhin kann das in Figur 4 gezeigte Messmittel auch ein optisches Messmittel sein, beispielsweise ein oder ein Laser, so dass darüber die Entfernung zu dem Rad gemessen werden kann.

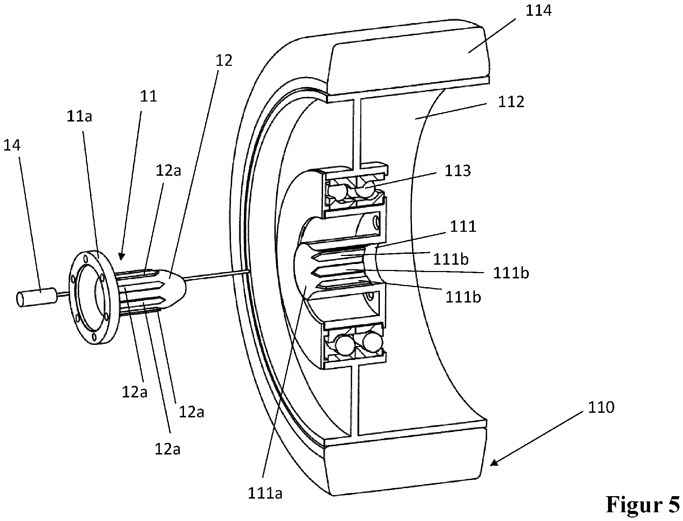

Teile der vorbeschriebenen Elemente der Figur 4 werden dann in dem nochmals vergrößerten Ausschnitt gemäß Figur 5 noch deutlicher erkennbar und insbesondere die Formgebung des Einführabschnittes 12 mit Mitnehmern 12a und des Aufnahmeabschnittes 111 mit entsprechenden Mitnehmern 111, sowie die sich verjüngende Form der Spitze 12b des Einführabschnittes 12 und des Eingangs 111a des Aufnahmeabschnittes 111. Insbesondere die in Figur 5 gezeigte bevorzugte Variante erlaubt ein besonders einfaches Einführen aber auch Herausnehmen des Einführmittels 11 im Falle des Andockens bzw. Abdockens. Ferner ist auch die bevorzugte Formgebung des Einführmittels 11 dargestellt, dass einen Flanschabschnitt 11a zeigt, der Bohrungen aufweist, um Schrauben für die Verbindung mit dem vorderen Gelenk 18b durchführen zu können.

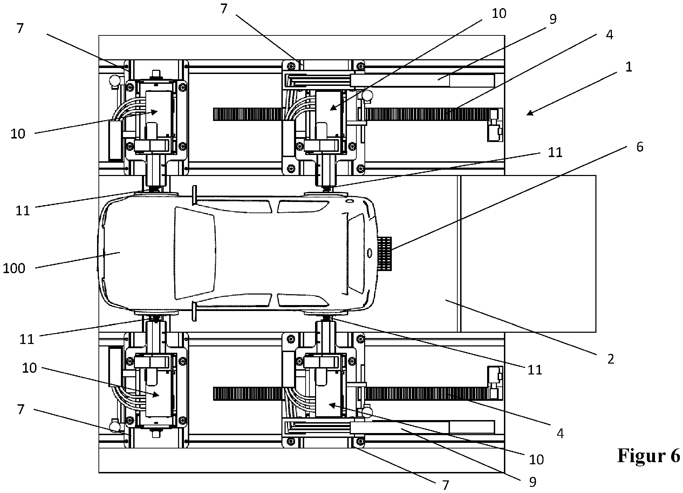

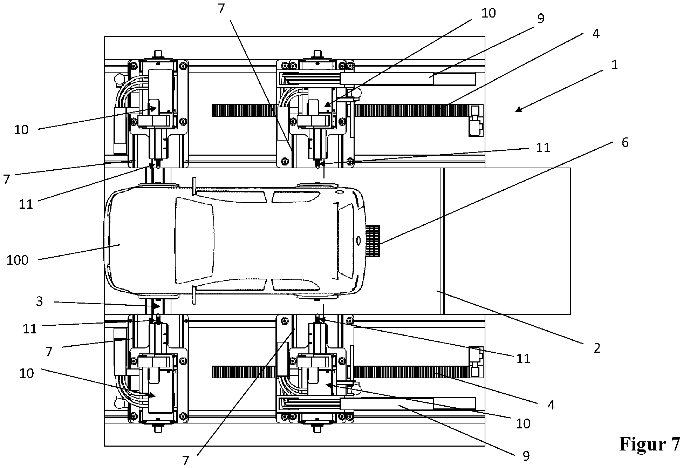

Die Figuren 6 und 7 zeigen ferner eine Vogelperspektive des Prüfstandes 1 mit darin aufgestelltem Kraftfahrzeug 100, wobei in der Ansicht der Figur 6 die Radvorrichtungen 10 mit dem Kraftfahrzeug 100 angedockt sind und in Figur 7 diese von dem Kraftfahrzeug 100 abgedockt sind. Hierbei zeigt sich ebenfalls, dass eine Variante bezüglich der Bewegung der Radvorrichtung 10 bzw. des Einführmittels in Y-Richtung darin besteht, dass entweder das Einführmittel 11 in Y-Richtung verfahrbar ist und/oder die Radvorrichtung 10, wie dies die Figuren 6 und 7 im Vergleich zueinander darstellen. Ein Verschieben der Radvorrichtungen 10 in Y-Richtung erfolgt ebenfalls bevorzugt über Querschienen oder dergleichen und einen Motor oder manuell. Auch sind die bevorzugt im Bodenbereich des Prüfstandes 1 eingelassenen Motoren für die Schienensysteme 4 sichtbar.

Die beschriebenen Verfahrbewegungen können bevorzugt über eine Steuereinheit bzw. Steuervorrichtung automatisiert angesteuert werden, so dass der gesamte Prüfstand 1 automatisiert und automatisch sowohl ein Kraftfahrzeug 100 ankoppeln als auch abkoppeln kann und auch die auszuführenden Tests durchführen kann. Dies bringt auch im Hinblick auf einen Notfall, z. B. einen Brand eines Kraftfahrzeuges 100, das auf der Aufstellfläche 2 abgestellt ist, den Vorteil mit sich, dass in einem solchen Fall eine sehr schnelle Demontage bzw. Abkopplung der Radvorrichtungen 10 von dem Kraftfahrzeug 100 möglich ist. Bei batteriebetriebenen Fahrzeugen 100 ist dies von herausgehobener Sicherheitsbedeutung, da das Lithium der lithiumenthaltenden Batterien auch ohne Sauerstoff weiter brennt und das Fahrzeug somit im Brandfall schnellstmöglich aus der Prüfzelle 8 gezogen werden muss, insbesondere ohne dass ein direkter Eingriff eines Mitarbeiters erfolgt. Das automatische Abkoppeln des Fahrzeuges 100 im Havarie- bzw. Notfall ist somit auch im Hinblick auf die Sicherheit von herausgehobener Bedeutung. Ein Verzurren oder sonstige aufwendige Montagearbeiten sind ebenfalls nicht notwendig, da die abgegebenen Drehmomente der Radvorrichtungen 10 keine Zugkraft erzeugen.

Die vorliegende Patentanmeldung bietet somit einen Prüfstand für Kraftfahrzeuge und ein Verfahren zum automatisierten An- bzw. Abdocken eines Kraftfahrzeuges an einen solchen Prüfstand an, wobei insbesondere im Notfall das Abdocken automatisch auslösbar und automatisiert durchführbar sein kann. Der Prüfstand weist auch eine erhöhte Sicherheit insbesondere im Hinblick auf die Prüfung von Elektrokraftfahrzeugen auf, die im Brandfall weniger schnell löschbar sind als herkömmliche Verbrennungsmotorkraftfahrzeuge bzw. gar nicht löschbar sind.
- 1: Prüfstand
- 2: Aufstellfläche
- 3: Mulde
- 4: Schienensystem
- 5: Gebläse
- 6: Luftauslass
- 7: Querschienen
- 8: Prüfzelle
- 9: Kabelschleppe
- 10: Radvorrichtungen
- 11: Einführmittel
- 11a: Flanschabschnitt
- 12: Einführabschnitt
- 12a: Mitnehmern
- 12b: Endabschnitt Einführabschnitt 12
- 13: Antriebsmittel
- 13a: Ausgangswelle
- 14: Messmittel
- 15: Antriebswelle
- 16: Drehmomentmesszelle bzw. Drehmomentmesswelle
- 16a: Buchse(n) der Drehmomentmesswelle 16
- 17: Stützeinheit
- 18a,b: Gelenke (hinteres, vorderes)
- 19: Gelenkbuchse
- 19a: Dichtung
- 20: Abschlusskopf
- 21: Aktuator
- 22: elastische Gelenkabdeckung

- R: Rahmen

- 100: Kraftfahrzeugen
- 110: Testrad
- 111: Vielkeilbuchse/Aufnahmeabschnitt
- 111a: Endabschnitt Aufnahmeabschnitt 111
- 111b: Mitnehmer Aufnahmeabschnitt 111
- 112: Felge
- 113: Entkopplungslager
- 114: Vollgummilauffläche

## Patentansprüche

1. Prüfstand (1) für das Testen von Kraftfahrzeugen (100) mit
- einem zu testenden Kraftfahrzeug mit mehreren Testrädern, die jeweils einen Aufnahmeabschnitt (111) aufweisen,
- einer Aufstellfläche (2), auf der ein zu testendes Kraftfahrzeug (100) aufstellbar ist,
- mindestens zwei Radvorrichtungen (10) zum Aufnehmen von Drehkräften einer Kraftfahrzeugachse oder zum Abgeben von Drehkräften an eine Kraftfahrzeugachse, die lateral versetzt zu der Aufstellfläche (2) angeordnet sind, wobei
- jede Radvorrichtung (10) ein Einführmittel (11) mit einem Einführabschnitt (12) aufweist, der formschlüssig mit einem Aufnahmeabschnitt (111) eines an dem Kraftfahrzeug (100) montierten Testrades (110) in Eingriff bringbar ist, wobei
- die Radvorrichtung (10) dazu eingerichtet ist, durch translatorisches Verfahren der Radvorrichtung und/oder des Einführmittels entlang der zumindest einen Richtung der Fahrzeugachse, den Einführabschnitt (12) des Einführmittels (11) formschlüssig mit dem Aufnahmeabschnitt (111) des Testrades (110) in Eingriff zu bringen oder von diesem zu lösen, wobei
der Einführabschnitt (12) keilwellenförmig mit Mitnehmern (12a) ausgebildet ist und die Testräder (110) jeweils eine Vielkeilbuchse (111) als Aufnahmeabschnitt zur formschlüssigen Aufnahme des Einführabschnittes (12) aufweisen.

2. Prüfstand gemäß zumindest Patentanspruch 1, **gekennzeichnet dadurch, dass** der Einführabschnitt (12) konusförmig ausgebildet ist.

3. Prüfstand gemäß zumindest einem der voranstehenden Patentansprüche, **gekennzeichnet dadurch, dass** der Einführabschnitt (12) und/oder der Aufnahmeabschnitt (111) zu einem Endabschnitt (12b; 111a) hin zugespitzt geformt sind.

4. Prüfstand gemäß zumindest einem der voranstehenden Patentansprüche, **gekennzeichnet dadurch, dass** die Radvorrichtung (10) ein Antriebsmittel (13) zum Rotieren und/oder zum translatorischen Verfahren des Einführmittels (11) aufweist.

5. Prüfstand gemäß zumindest einem der voranstehenden Patentansprüche 1 bis 4, **gekennzeichnet dadurch, dass** die Radvorrichtung (10) ein Antriebsmittel (13) zum Rotieren des Einführmittels (11) aufweist und die Radvorrichtung (10) in Querrichtung des Kraftfahrzeuges (100) translatorisch verschiebbar ist.

6. Prüfstand gemäß zumindest einem der voranstehenden Patentansprüche, **gekennzeichnet dadurch, dass** die Radvorrichtung (10) zumindest ein Messmittel (14) zum Erfassen einer Einführposition des Einführabschnittes (12) in den Aufnahmeabschnitt (111) in Längsrichtung des Kraftfahrzeuges (100) und/oder ein Messmittel (14) zum Erfassen einer Einführposition in Querrichtung des Kraftfahrzeuges (100) aufweist.

7. Prüfstand gemäß zumindest Patentanspruch 6, **gekennzeichnet dadurch, dass** das Messmittel (14) ein mechanisches Abtastmittel, ein optisches Abtastmittel und/oder ein Bilderkennungsmittel umfasst.

8. Prüfstand gemäß zumindest einem der voranstehenden Patentansprüche, **gekennzeichnet dadurch, dass** das Einführmittel (11) mit einer Antriebswelle (15) verbunden ist und die Antriebswelle (15) gelenkig in der Radvorrichtung (10) gelagert ist.

9. Prüfstand gemäß zumindest einem der voranstehenden Patentansprüche, **gekennzeichnet dadurch, dass** der Prüfstand für das Prüfen von zweiachsigen Kraftfahrzeugen mit je einer Radvorrichtung (10) für jedes Rad des Kraftfahrzeuges (100) eingerichtet ist, wobei die Einführmittel (11), deren Radvorrichtungen (10) den Vorderrädern zugeordnet sind, fluchtend zu einer quer zu der Aufstellfläche (2) angeordneten Mulde (3) zu einer Aufnahme der Vorderräder des Kraftfahrzeuges (100) angeordnet sind, und wobei die Radvorrichtungen (10), die den Hinterrädern zugeordnet sind, lateral versetzt zu der Aufstellfläche (2) angeordnet und parallel zu der Längsachse des Kraftfahrzeuges (100) bewegbar sind.

10. Prüfstand gemäß zumindest einem der voranstehenden Patentansprüche, **gekennzeichnet dadurch, dass** eine Steuervorrichtung vorgesehen ist, die zumindest mit den Radvorrichtungen (10) des Prüfstandes (1) elektrisch verbunden ist.

11. Verfahren für das Andocken eines Kraftfahrzeuges an dem Prüfstand gemäß zumindest einem der voranstehenden Patentansprüche, umfassend die Schritte:
- Aufstellen des Kraftfahrzeuges (100) mit montierten Testrädern (110) auf der Aufstellfläche (2) des Prüfstandes (1),
- Verfahren einer oder mehrerer Radvorrichtungen (10) parallel zu der Längsachse der Aufstellfläche (2), so dass jedes Einführmittel (11) fluchtend zu einem Aufnahmeabschnitt (111) eines an dem Kraftfahrzeug (100) montierten Testrades (110) angeordnet ist,
- Verfahren jeder Radvorrichtung (10) oder jedes Einführmittels (11) quer zu der Richtung der Längsachse der Aufstellfläche (2) bis ein Eingriff zwischen Einführabschnitt (12) und Aufnahmeabschnitt (111) hergestellt ist.

12. Verfahren gemäß Patentanspruch 11, **gekennzeichnet dadurch, dass** für das Einführen des Einführabschnittes (12) in den Aufnahmeabschnitt (111) der Einführabschnitt (12) in Toggelbewegungen versetzt wird.

13. Verfahren gemäß Patentanspruch 11 und/oder 12, **gekennzeichnet dadurch, dass** die Position von Mitnehmern (111b) des Aufnahmeabschnittes (111) mit einem Messmittel (14), insbesondere einem optischen Messmittel, erfasst werden und der Einführabschnitt (12) entsprechend rotiert wird, so dass die Mitnehmer (12a) des Einführabschnittes (12a) bei dem Einführen des Einführabschnittes (12) nicht mit denen des Aufnahmeabschnittes (111b) kollidieren.

14. Verfahren für das Abdocken eines Kraftfahrzeuges von einem Prüfstand, wobei der Prüfstand gemäß zumindest einem der voranstehenden Patentansprüche 1 bis 10 ausgebildet ist, umfassend den Schritt:
- Verfahren einer Radvorrichtung (10) oder eines Einführmittels (11) einer Radvorrichtung (10) quer zu der Richtung einer Längsachse einer Aufstellfläche (2) für ein Kraftfahrzeug des Prüfstandes bis ein Einführabschnitt (12) des Einführmittels (11) und ein Aufnahmeabschnitt (111) eines an dem Kraftfahrzeug (100) montierten Testrades (110) außer Eingriff gebracht sind.

15. Verfahren gemäß zumindest dem voranstehenden Patentanspruch 14, **gekennzeichnet dadurch, dass** der Schritt des Verfahrens jeder Radvorrichtung (10) oder jedes Einführmittels (11) quer zu der Richtung der Längsachse der Aufstellfläche (2) bis der Einführabschnitt (12) und Aufnahmeabschnitt (111) außer Eingriff gebracht sind automatisch durchgeführt wird, wenn ein Notfall detektiert wurde.

16. Verfahren gemäß zumindest einem der voranstehenden Patentansprüche 14 bis 15, **gekennzeichnet dadurch, dass** Antriebsmittel (13) der Radvorrichtungen (10) automatisch momentenfrei geschaltet werden, wenn ein Notfall detektiert wurde.

## Claims

1. Test stand (1) for testing motor vehicles (100) with
- a motor vehicle to be tested having a plurality of test wheels which each have a receiving section (111),
- a set-up surface (2) on which a motor vehicle (100) to be tested can be set up,
- at least two wheel devices (10) for receiving rotational forces of a motor vehicle axle or for outputting rotational forces to a motor vehicle axle, which wheel devices are arranged laterally offset with respect to the set-up surface (2), wherein
- each wheel device (10) has an insertion means (11) having an insertion section (12) which can be brought into engagement in a form-fitting manner with a receiving section (111) of a test wheel (110) mounted on the motor vehicle (100), wherein
- the wheel device (10) is configured to bring the insertion section (12) of the insertion means (11) into engagement with the receiving section (111) of the test wheel (110) in a form-fitting manner or to release said insertion section therefrom by means of translational movement of the wheel device and/or of the insertion means along the at least one direction of the vehicle axis, wherein
the insertion section (12) is configured in the form of a splined shaft having drivers (12a), and the test wheels (110) each have a multi-spline bushing (111) as a receiving section for receiving the insertion section (12) in a form-fitting manner.

2. Test stand according to at least Patent Claim 1, **characterized in that** the insertion section (12) is configured in the form of a cone.

3. Test stand according to at least one of the preceding patent claims, **characterized in that** the insertion section (12) and/or the receiving section (111) are/is of tapered form towards an end section (12b; 111a).

4. Test stand according to at least one of the preceding patent claims, **characterized in that** the wheel device (10) has a drive means (13) for rotating and/or for translational movement of the insertion means (11).

5. Test stand according to at least one of the preceding Patent Claims 1 to 4, **characterized in that** the wheel device (10) has a drive means (13) for rotatingthe insertion means (11), and the wheel device (10) is displaceable in a translational manner in the transverse direction of the motor vehicle (100).

6. Test stand according to at least one of the preceding patent claims, **characterized in that** the wheel device (10) has at least one measuring means (14) for detecting an insertion position of the insertion section (12) into the receiving section (111) in the longitudinal direction of the motor vehicle (100) and/or a measuring means (14) for detecting an insertion position in the transverse direction of the motor vehicle (100).

7. Test stand according to at least Patent Claim 6, **characterized in that** the measuring means (14) comprises a mechanical scanning means, an optical scanning means and/or an image recognition means.

8. Test stand according to at least one of the preceding patent claims, **characterized in that** the insertion means (11) is connected to a drive shaft (15), and the drive shaft (15) is mounted in an articulated manner in the wheel device (10).

9. Test stand according to at least one of the preceding patent claims, **characterized in that** the test stand is configured for testing two-axle motor vehicles having in each case one wheel device (10) for each wheel of the motor vehicle (100), wherein the insertion means (11), the wheel devices (10) of which are assigned to the front wheels, are arranged in alignment with a depression (3), which is arranged transversely with respect to the set-up surface (2), for receiving the front wheels of the motor vehicle (100), and wherein the wheel devices (10) which are assigned to the rear wheels are arranged laterally offset with respect to the set-up surface (2) and are movable parallel to the longitudinal axis of the motor vehicle (100).

10. Test stand according to at least one of the preceding patent claims, **characterized in that** a control device is provided which is electrically connected at least to the wheel devices (10) of the test stand (1).

11. Method for docking a motor vehicle to the test stand according to at least one of the preceding patent claims, comprising the steps:
- setting up the motor vehicle (100) with mounted test wheels (110) on the set-up surface (2) of the test stand (1),
- moving one or more wheel devices (10) parallel to the longitudinal axis of the set-up surface (2) such that each insertion means (11) is arranged in alignment with a receiving section (111) of a test wheel (110) mounted on the motor vehicle (100),
- moving each wheel device (10) or each insertion means (11) transversely with respect to the direction of the longitudinal axis of the set-up surface (2) until engagement is produced between insertion section (12) and receiving section (111).

12. Method according to Patent Claim 11, **characterized in that** the insertion section (12) is set into toggle movements for the insertion of the insertion section (12) into the receiving section (111).

13. Method accordingto Patent Claim 11 and/or 12, **characterized in that** the position of drivers (111b) of the receiving section (111) are detected using a measuring means (14), in particular an optical measuring means, and the insertion section (12) is rotated correspondingly, such that the drivers (12a) of the insertion section (12a) do not collide with those of the receiving section (111b) during the insertion of the insertion section (12).

14. Method for docking a motor vehicle from a test stand, wherein the test stand is configured according to at least one of the preceding Patent Claims 1 to 10, comprising the step:
- moving a wheel device (10) or an insertion means (11) of a wheel device (10) transversely with respect to the direction of a longitudinal axis of a set-up surface (2) for a motor vehicle of the test stand until an insertion section (12) of the insertion means (11) and a receiving section (111) of a test wheel (110) mounted on the motor vehicle (100) are brought out of engagement.

15. Method according to at least the preceding Patent Claim 14, **characterized in that** the step of moving each wheel device (10) or each insertion means (11) transversely with respect to the direction of the longitudinal axis of the set-up surface (2) until the insertion section (12) and receiving section (111) are brought out of engagement is carried out automatically if an emergency has been detected.

16. Method according to at least one of the preceding Patent Claims 14 to 15, **characterized in that** drive means (13) of the wheel devices (10) are automatically switched in a torque-free manner if an emergency has been detected.

## Revendications

1. Banc d'essai (1) pour le test de véhicules automobiles (100) avec
- un véhicule automobile à tester avec plusieurs roues de test qui présentent chacune une section de réception (111),
- une surface de pose (2) sur laquelle un véhicule automobile (100) à tester peut être posé,
- au moins deux dispositifs de roue (10) pour recevoir des forces de rotation d'un essieu de véhicule automobile ou pour délivrer des forces de rotation à un essieu de véhicule automobile, qui sont disposés de manière décalée latéralement par rapport à la surface de pose (2),
- chaque dispositif de roue (10) présentant un moyen d'introduction (11) avec une section d'introduction (12) qui peut être amenée en prise par engagement par correspondance de forme avec une section de réception (111) d'une roue de test (110) montée sur le véhicule automobile (100),
- le dispositif de roue (10) étant conçu pour amener, par déplacement en translation du dispositif de roue et/ou du moyen d'introduction le long de l'au moins une direction de l'essieu de véhicule, la section d'introduction (12) du moyen d'introduction (11) en prise par engagement par correspondance de forme avec la section de réception (111) de la roue de test (110) ou pour la détacher de celle-ci,
la section d'introduction (12) étant réalisée en forme d'arbre cannelé avec des entraîneurs (12a) et les roues de test (110) présentant chacune une douille cannelée multiple (111) en tant que section de réception pour recevoir par engagement par correspondance de forme la section d'introduction (12).

2. Banc d'essai selon au moins la revendication 1, **caractérisé en ce que** la section d'introduction (12) est réalisée en forme de cône.

3. Banc d'essai selon au moins l'une quelconque des revendications précédentes, **caractérisé en ce que** la section d'introduction (12) et/ou la section de réception (111) sont formées de manière pointue vers une section d'extrémité (12b ; 111a).

4. Banc d'essai selon au moins l'une quelconque des revendications précédentes, **caractérisé en ce que** le dispositif de roue (10) présente un moyen d'entraînement (13) pour la rotation et/ou pour le déplacement en translation du moyen d'introduction (11).

5. Banc d'essai selon au moins l'une quelconque des revendications précédentes 1 à 4, **caractérisé en ce que** le dispositif de roue (10) présente un moyen d'entraînement (13) pour la rotation du moyen d'introduction (11) et le dispositif de roue (10) peut être déplacé en translation dans la direction transversale du véhicule automobile (100).

6. Banc d'essai selon au moins l'une quelconque des revendications précédentes, **caractérisé en ce que** le dispositif de roue (10) présente au moins un moyen de mesure (14) pour détecter une position d'introduction de la section d'introduction (12) dans la section de réception (111) dans la direction longitudinale du véhicule automobile (100) et/ou un moyen de mesure (14) pour détecter une position d'introduction dans la direction transversale du véhicule automobile (100).

7. Banc d'essai selon au moins la revendication 6, **caractérisé en ce que** le moyen de mesure (14) comprend un moyen de balayage mécanique, un moyen de balayage optique et/ou un moyen de reconnaissance d'image.

8. Banc d'essai selon au moins l'une quelconque des revendications précédentes, **caractérisé en ce que** le moyen d'introduction (11) est connecté à un arbre d'entraînement (15) et l'arbre d'entraînement (15) est logé de manière articulée dans le dispositif de roue (10).

9. Banc d'essai selon au moins l'une quelconque des revendications précédentes, **caractérisé en ce que** le banc d'essai est conçu pour l'essai de véhicules automobiles à deux essieux avec à chaque fois un dispositif de roue (10) pour chaque roue du véhicule automobile (100), les moyens d'introduction (11), dont les dispositifs de roue (10) sont associés aux roues avant, étant disposés en alignement avec une auge (3) disposée transversalement à la surface de pose (2) pour recevoir les roues avant du véhicule automobile (100), et les dispositifs de roue (10), qui sont associés aux roues arrière, étant disposés de manière décalée latéralement par rapport à la surface de pose (2) et pouvant être déplacés parallèlement à l'axe longitudinal du véhicule automobile (100).

10. Banc d'essai selon au moins l'une quelconque des revendications précédentes, **caractérisé en ce qu'**un dispositif de commande est prévu, qui est connecté électriquement au moins aux dispositifs de roue (10) du banc d'essai (1).

11. Procédé pour l'amarrage d'un véhicule automobile au banc d'essai selon au moins l'une quelconque des revendications précédentes, comprenant les étapes suivantes :
- pose du véhicule automobile (100) avec des roues de test (110) montées sur la surface de pose (2) du banc d'essai (1),
- déplacement d'un ou de plusieurs dispositifs de roue (10) parallèlement à l'axe longitudinal de la surface de pose (2) de sorte que chaque moyen d'introduction (11) soit disposé en alignement avec une section de réception (111) d'une roue de test (110) montée sur le véhicule automobile (100),
- déplacement de chaque dispositif de roue (10) ou de chaque moyen d'introduction (11) transversalement à la direction de l'axe longitudinal de la surface de pose (2) jusqu'à ce qu'une prise entre la section d'introduction (12) et la section de réception (111) soit établie.

12. Procédé selon la revendication 11, **caractérisé en ce que** pour l'introduction de la section d'introduction (12) dans la section de réception (111), la section d'introduction (12) est mise en mouvements de basculement.

13. Procédé selon la revendication 11 et/ou 12, **caractérisé en ce que** la position d'entraîneurs (111b) de la section de réception (111) est détectée avec un moyen de mesure (14), en particulier un moyen de mesure optique, et la section d'introduction (12) est tournée de manière correspondante de sorte que les entraîneurs (12a) de la section d'introduction (12a) n'entrent pas en collision avec ceux de la section de réception (111b) lors de l'introduction de la section d'introduction (12).

14. Procédé pour l'amarrage d'un véhicule automobile d'un banc d'essai, dans lequel le banc d'essai est réalisé selon au moins l'une quelconque des revendications précédentes 1 à 10, comprenant l'étape suivante :
- déplacement d'un dispositif de roue (10) ou d'un moyen d'introduction (11) d'un dispositif de roue (10) transversalement à la direction d'un axe longitudinal d'une surface de pose (2) pour un véhicule automobile du banc d'essai jusqu'à ce qu'une section d'introduction (12) du moyen d'introduction (11) et une section de réception (111) d'une roue de test (110) montée sur le véhicule automobile (100) soient mises hors prise.

15. Procédé selon au moins la revendication 14 précédente, **caractérisé en ce que** l'étape du déplacement de chaque dispositif de roue (10) ou de chaque moyen d'introduction (11) transversalement à la direction de l'axe longitudinal de la surface de pose (2) jusqu'à ce que la section d'introduction (12) et la section de réception (111) soient mises hors prise est réalisée automatiquement lorsqu'une urgence a été détectée.

16. Procédé selon au moins l'une quelconque des revendications précédentes 14 à 15, **caractérisé en ce que** des moyens d'entraînement (13) des dispositifs de roue (10) sont commutés automatiquement sans couple lorsqu'une urgence a été détectée.
